Europäisches Patentamt

(19) European Patent Office

Office européen des brevets

(11) Numéro de publication: **0 153 244**
**A 1**

## (12) DEMANDE DE BREVET EUROPEEN

(21) Numéro de dépôt: **85400260.7**

(22) Date de dépôt: **14.02.85**

(51) Int. Cl.⁴: **A 23 N 15/00,** A 23 N 5/00

(30) Priorité: **14.02.84 FR 8402234**
**28.12.84 FR 8420051**

(43) Date de publication de la demande: **28.08.85**
**Bulletin 85/35**

(84) Etats contractants désignés: **AT BE CH DE GB IT LI LU NL SE**

(71) Demandeur: **Aubert-Maguero, Paul, 9, rue Camille Flammarion, F-24000 Perigueux (FR)**

(72) Inventeur: **Aubert-Maguero, Paul, 9, rue Camille Flammarion, F-24000 Perigueux (FR)**

(74) Mandataire: **Rousset, Jean-Claude et al, Cabinet Netter 40, rue Vignon, F-75009 Paris (FR)**

(54) **Appareil pour séparer les têtes d'ail en gousses.**

㊗ L'invention concerne un appareil pour séparer les têtes d'ail en gousses, qui comprend une surface inférieure (40) sensiblement horizontale, propre à supporter les têtes d'ail, et une surface supérieure (41) propre à s'appuyer sur les têtes posées sur la surface inférieure, la surface inférieure circulant sans fin dans une direction longitudinale (F) et la surface supérieure, qui ne circule pas dans la direction longitudinale, présentant un degré de liberté en hauteur, et des moyens (53) pour presser la surface supérieure contre les têtes, tout en lui permettant d'être soulevée par celles-ci, de façon à faire tourner les têtes en tous sens et à exercer sur elles des forces de rupture en évitant de détériorer les gousses.

1

## Appareil pour séparer les têtes d'ail en gousses.

L'invention concerne la séparation des têtes d'ail en gousses.

Les têtes ou caïeux d'ail sont composées de gousses, dont chacune est revêtue d'une pellicule ou peau qui n'est pas comestible et qu'il faut enlever pour utiliser la gousse d'ail.

Le pelage des gousses d'ail peut se faire dans les fours rotatifs décrits par les brevets français N° 1 560 456 et N° 1 561 968.

Avant de passer l'ail dans ces fours, il est nécessaire de séparer les unes des autres les gousses composant la tête.

Le but de l'invention est de fournir un appareil pour réaliser cette dernière opération, un tel appareil assurant une séparation complète des gousses sans les détériorer. Il est en effet important que les gousses ne soient pas blessées, non seulement pour la présentation du produit, mais aussi pour sa conservation et son utilisation comme semence.

L'appareil selon l'invention comprend une surface inférieure sensiblement horizontale, propre à supporter les têtes d'ail, et une surface supérieure propre à s'appuyer sur les têtes posées sur la surface inférieure, la surface inférieure circulant sans fin dans une direction longitudinale et la surface supérieure, qui ne circule pas dans la direction longitudinale, présentant un degré de liberté en hauteur, et des moyens pour presser la surface supérieure contre les têtes, tout en lui permettant d'être soulevée par celles-ci, de façon à faire tourner les têtes en tous sens et à exercer sur elles des forces de rupture en évitant de détériorer les gousses.
Le mouvement vers le bas de la surface supérieure est, de préférence, limité par des butées, lesquelles peuvent être réglables de façon à adapter la position limite inférieure de la surface supérieure à différentes dimensions de têtes d'ail.

Selon une caractéristique de l'invention, on prévoit des moyens de support rigides pour maintenir la surface inférieure fixe en hauteur et l'empêcher de s'affaisser sous la pression transmise par les têtes d'ail.

Selon une caractéristique de l'invention, la surface supérieure comprend une portion de surface horizontale suspendue de façon à pouvoir être soulevée d'un seul bloc par les têtes d'ail, ou une pluralité de telles portions de surface horizontales suspendues de façon à pouvoir être soulevées individuellement. A chaque portion de surface supérieure horizontale peut être raccordée, en amont de celle-ci par rapport au sens de circulation de la surface inférieure, une portion de surface descendante qui se soulève avec elle.

Selon un mode de réalisation de l'invention, la surface inférieure et la surface supérieure sont formées chacune d'éléments de surface convexes répartis selon la direction longitudinale.

Les éléments de surface de contact peuvent être cylindriques, leurs génératrices s'étendant perpendiculairement à la direction longitudinale.

Selon une caractéristique avantageuse, les éléments de surface de contact appartiennent à des rouleaux alignés à distance les uns des autres dans la direction longitudinale, la distance minimale entre deux rouleaux voisins de la surface inférieure étant inférieure à la plus petite dimension des gousses d'ail à séparer.

Selon un autre mode de réalisation, la surface inférieure est constituée par la surface rugueuse d'une bande transporteuse.

La bande transporteuse est, de préférence, recouverte d'une couche de caoutchouc ou de matière plastique présentant une surface très rugueuse, par exemple la surface dite "surface griffée", qui donne une bonne adhérence sur les têtes d'ail et une certaine élasticité dans la direction perpendiculaire à la surface. Le même matériau et le même état de surface peuvent être utilisés pour réaliser la surface supérieure.

La bande transporteuse peut être supportée, dans la région où elle constitue la surface inférieure, par des rouleaux espacés dans la direction longitudinale.

D'autres caractéristiques et avantages de l'invention ressortiront de la description donnée ci-après à titre illustratif et non limitatif, et des dessins annexés, dans lesquels :

- la figure 1 est une vue schématique en coupe longitudinale, selon la ligne 1-1 de la figure 2, d'un appareil conforme à l'invention;

- la figure 2 est une coupe selon la ligne 2-2 de la figure 1;

- la figure 3 est une coupe transversale d'une tête d'ail selon la ligne 3-3 de la figure 4;

- la figure 4 est une coupe selon la ligne 4-4 de la figure 3;

- la figure 5 est une vue de côté schématique d'un autre appareil conforme à l'invention.

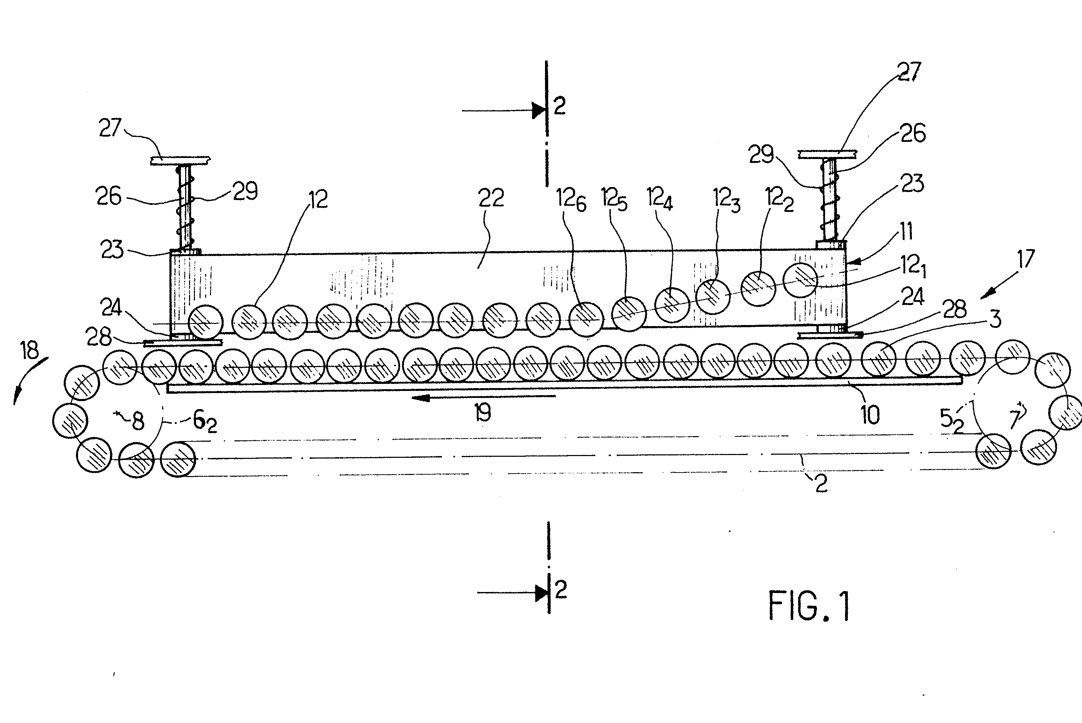

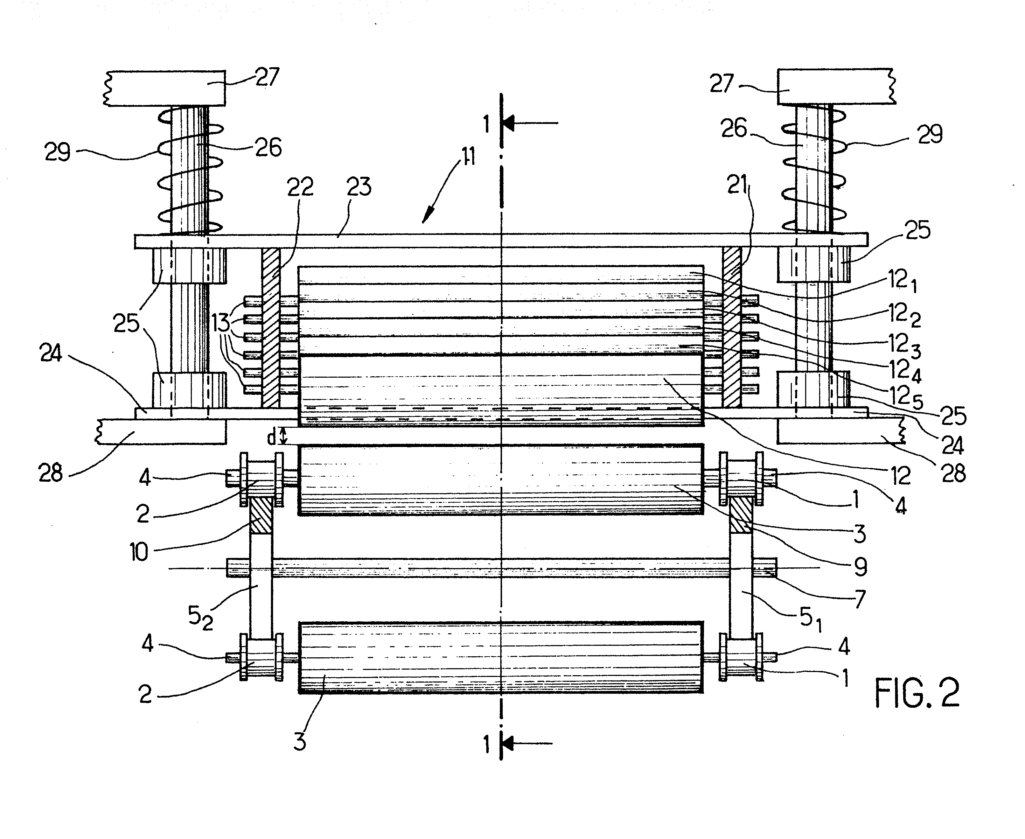

Dans l'appareil représenté aux figures 1 et 2, deux chaînes sans fin 1 et 2 à galets et axes creux circulent entre des roues dentées $5_1$ et $6_1$ (non représentée) pour la chaîne 1, $5_2$ et $6_2$ pour la chaîne 2. Les roues $5_1$ et $5_2$ sont portées par un axe 7 et les roues $6_1$ et $6_2$ par un axe 8, ces deux axes étant parallèles, distants l'un de l'autre dans une direction longitudinale qui est la direction perpendiculaire au plan de la figure 2, et perpendiculaires à cette direction longitudinale.

Chacune des chaînes 1 et 2 forme entre les roues dentées un brin supérieure et un brin inférieur, les galets du brin supérieur reposant sur un chemin de roulement 9 ou 10 respectivement de façon que ce brin supérieur soit rectiligne.

Dans les axes creux sont placés des axes pleins 4 dont chacun porte un rouleau 3 qui peut tourner librement sur l'axe. Ces rouleaux, dont les axes sont parallèles à ceux des roues dentées, sont répartis uniformément sur toute la longueur des chaînes.

L'axe 8 est entraîné par un motoréducteur non représenté de façon à faire circuler les rouleaux liés au brin supérieur des chaînes dans la direction longitudinale, selon la flèche 19.

Les rouleaux ont un diamètre de 40 mm environ et sont séparés les uns des autres par un intervalle de quelques millimètres.

Au-dessus de l'ensemble qui vient d'être décrit se trouve une autre série de rouleaux 12 de même diamètre que les rouleaux 3, portés par des axes 13 s'étendant parallèlement aux axes 4. Les rouleaux 12 peuvent tourner librement sur les axes 13 qui sont fixés sur un châssis 11.

Le châssis 11 comprend deux plaques verticales 21 et 22 s'étendant dans la direction longitudinale de part et d'autre de la longueur des rouleaux 12, et dans lesquelles sont fixées les extrémités des axes 13. Les plaques 21 et 22 sont solidaires de deux paires de traverses, chaque paire comprenant une traverse supérieure 23 et une traverse inférieure 24 situées l'une au-dessus de l'autre. Les extrémités des traverses sont munies de bossages 25 situés également les uns au-dessus des autres, et présentant des alésages alignés leur permettant de coulisser sur des colonnes verticales 26 ancrées à leurs extrémités dans des éléments supérieurs 27 et des éléments inférieurs 28 du bâti de l'appareil, lequel bâti n'est pas représenté dans son ensemble.

Le coulissement des bossages 25 sur les colonnes 26 détermine un mouvement vertical de translation du châssis 11. Ce mouvement est limité vers le bas par la butée constituée par les éléments inférieurs 28 pour les traverses inférieures 24. Le châssis est sollicité dans sa position extrême inférieure, qui est celle représentée dans les figures, par des ressorts hélicoïdaux 29 entourant les colonnes 26 et comprimés entre les traverses supérieures 23 et les éléments supérieurs 27, et dont l'action s'ajoute au poids du châssis et des rouleaux 12.

A partir de la droite de la figure 1, c'est-à-dire dans le sens de circulation des rouleaux 3, les six premiers rouleaux 12, repérés $12_1$ à $12_6$, ont leurs axes alignés selon un plan descendant légèrement vers le plan des axes des rouleaux 3 portés par les brins supérieurs des chaînes 1 et 2, la différence de hauteur entre les axes de deux rouleaux 12 voisins étant de 7 mm environ. Les axes des rouleaux 12 suivants sont dans un même plan parallèle à celui des axes des rouleaux 3. Une distance d de 8 mm est prévue entre le plan tangent supérieur aux rouleaux 3 du brin supérieur et le plan tangent inférieur aux rouleaux 12 qui en sont les plus proches, lorsque le châssis est en position basse.

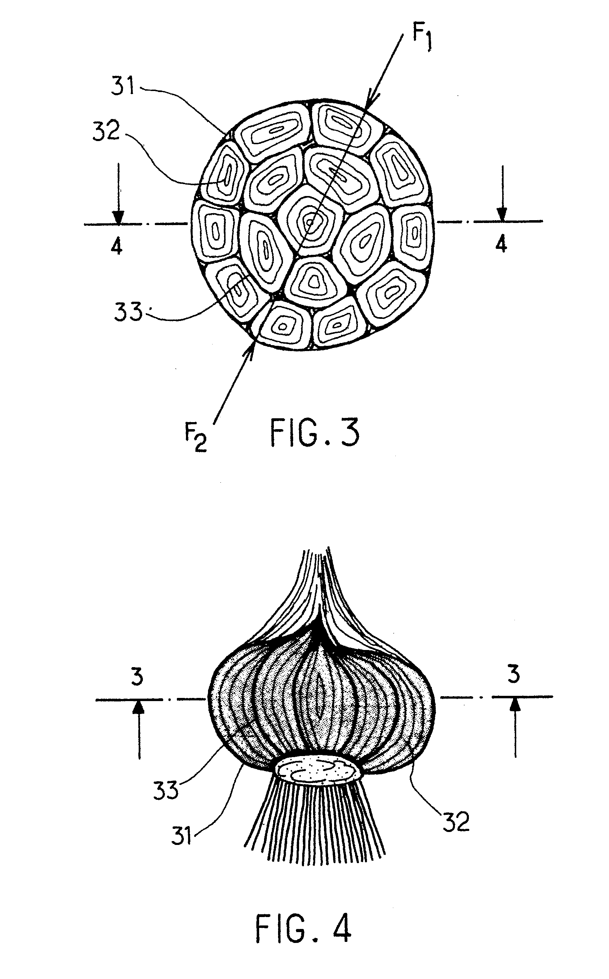

Une tête d'ail, comme illustré par les figures 3 et 4, comprend un faisceau de gousses 32 séparées les unes des autres par des enveloppes intermédiaires 33 et dont l'ensemble est entouré par une enveloppe extérieure 31.

Pour utiliser l'appareil, on pose les têtes d'ail sur les rouleaux 3 du brin supérieur, en amont des rouleaux 12 par rapport au sens de circulation, comme indiqué par la flèche 17. Elles sont entraînées par le mouvement des rouleaux 3 et arrivent au-dessous des rouleaux 12.

Si des têtes se trouvent superposées,elles sont ramenées en une couche simple lorsqu'elles rencontrent les rouleaux $12_1$ à $12_6$. Ensuite, les têtes d'ail tendent à soulever le châssis 11, contre l'action des ressorts 29, lorsqu'un des rouleaux 12 se trouve sur leur chemin.

Les rouleaux 3 et 12 exercent sur les têtes d'ail des forces qui les font tourner en tous sens.Les points d'application de ces forces, représentées par exemple par les flèches $F_1$ et $F_2$ à la figure 3, se déplacent donc autour de la surface des têtes, ce qui facilite la rupture des enveloppes 31 et 33 et la séparation des gousses 32. L'intensité de ces forces dépend des ressorts 29, pour lesquels des moyens de réglage non représentés peuvent être prévus. La forme arrondie des rouleaux 3 et 12 et la possibilité de déplacement vertical des rouleaux 12 évitent la détérioration des gousses. Si nécessaire, la surface des rouleaux peut être en matériau élastique. L'intervalle entre deux rouleaux 3 voisins est inférieur à la plus petite dimension des gousses, qui est habituellement de 4 mm, ce qui évite que les gousses risquent de tomber entre les rouleaux.

Les gousses ainsi séparées continuent d'être entraînées par les rouleaux 3 au-delà du dernier rouleau 12, puis sont recueillies lorsque les rouleaux 3 passent sur les roues 6 (flèche 18).

La portion de la surface de chacun des rouleaux 3 et 12 accessible aux gousses d'ail à traiter constitue un élément de surface de contact convexe, les éléments de surface des rouleaux 3 du brin supérieur et les éléments de surface des rouleaux 12 étant répartis selon la direction longitudinale et formant respectivement une surface inférieure destinée à supporter les têtes d'ail et une surface supérieure destinée à s'appuyer sur les têtes posées sur la surface inférieure.

Chaque tête d'ail à traiter est emprisonnée entre deux éléments convexes adjacents de la surface inférieure. Elle est donc entraînée positivement par la surface inférieure et sa progression ne peut être contrariée par la résistance exercée par la surface supérieure.

Au cours de son déplacement longitudinal, la surface inférieure est maintenue fixe en hauteur par les chemins de roulement 9 et 10.

On prévoit pour le châssis 11 une course en hauteur suffisante pour qu'il puisse se soulever et laisser passer les têtes d'ail non encore séparées sans les blesser, et s'abaisser pour presser les têtes jusqu'à séparation complète des gousses.

On décrit maintenant l'appareil représenté à la fi-

gure 5.

Une bande transporteuse 42 circule sans fin entre deux tambours 50 de même diamètre dont les axes sont situés dans un même plan horizontal, l'ensemble étant entraîné par un moteur non représenté. Le brin supérieur de la bande 42 est supporté par des rouleaux 43 régulièrement espacés dans la direction longitudinale, c'est-à-dire la direction de déplacement du brin supérieur, de façon que celui-ci s'étende sensiblement dans un plan horizontal fixe. Les rouleaux 43 sont montés, libres en rotation, sur le bâti de l'appareil. La bande 42 présente, comme indiqué plus haut, une couche extérieure élastique et à surface rugueuse.

Au-dessus de la partie de la bande 42 supportée par les rouleaux 43, dont la face tournée vers le haut définit la surface inférieure 40 de l'appareil, sont disposés deux plateaux 51 dont la face tournée vers le bas définit la surface supérieure 41 de l'appareil.Les deux plateaux 51 sont placés l'un après l'autre dans le sens de circulation de la surface inférieure 50, indiqué par la flèche F.

Chaque plateau 51 est articulé à des leviers 46, 47 pouvant pivoter autour d'axes fixes 52 situés plus haut que le plateau.Les axes 52 sont horizontaux et perpendiculaires au plan de la figure 1, donc parallèles à ceux des tambours 50 et des rouleaux 43. Les leviers 46, 47 sont parallèles entre eux et leur longueur entre les axes 52 et leur point d'articulation au plateau 51 est la même,formant ainsi un parallélogramme déformable et permettant au plateau 51 de se déplacer parallèlement à lui-même selon un mouvement présentant une composante verticale et une composante dans la direction longitudinale.

Le mouvement du plateau 51 est limité dans le sens d'avant en arrière, c'est-à-dire dans le sens opposé à la flèche F, par une butée 48 qui, dans l'exemple représenté, coopère avec un prolongement de l'un au moins des leviers 46 au-delà de l'axe 52 correspondant. Dans la position limite définie par la butée, les points d'articulation des leviers 46,47 avec les plateaux 51 sont situés en avant des axes 52 correspondants. Cette position correspond à une position limite basse de la surface supérieure 41, à partir de laquelle celle-ci peut se déplacer vers le haut et vers l'avant. La butée 48 est réglable de façon à permettre un ajustement de la position basse en fonction de la grosseur des têtes d'ail à traiter.

Chacun des plateaux 51 est revêtu sur sa surface infé- d'un morceau de bande semblable à la bande transporteuse 42 de façon à donner à la surface supérieure 41 des caractéristiques semblables à celles de la surface inférieure 40. La surface supérieure 41 comprend deux portions de surface horizontales 44 correspondant respectivement à des parties horizontales antérieures des deux plateaux 51, auxquelles se raccordent des parties obliques 45 correspondant à des parties obliques postérieures des plateaux. Les parties de surface 45 sont orientées de façon descendante dans le sens F de circulation de la surface inférieure 40 et forment avec les portions 44 des dièdres assez ouverts. Des poids 53 sont posés sur les plateaux 51.

La bande transporteuse 42 est alimentée en têtes d'ail par une seconde bande transporteuse 54 munie de taquets 55, qui puise les têtes d'ail dans un réservoir non représenté et les dépose sur le brin horizontal de la bande 42, en amont de la surface supérieure 41. La largeur de la bande 54 et l'espacement des taquets 55 sont tels qu'une seule tête d'ail soit présente entre deux taquets consécutifs, et les vitesses relatives des deux bandes transporteuses sont telles que la distance entre deux têtes d'ail posées sur la bande 42, dans la direction longitudinale, soit au moins égale à la longueur d'une portion de surface supérieure 44.

Le fonctionnement de l'appareil est le suivant.

Les têtes d'ail déposées sur la bande transporteuse 42 sont acheminées par le déplacement de celles-ci sous les plateaux 51. En raison de l'inclinaison des portions de surface 45, l'espace compris entre le premier plateau suspendu 51 et la surface inférieure 40 présente dans sa partie arrière une hauteur supérieure au diamètre des têtes d'ail, lesquelles peuvent y pénétrer librement, puis cette hauteur diminue de sorte que les têtes sont obligées de soulever le plateau 51 pour pouvoir poursuivre leur progression. Une seule tête étant présente à la fois sous le plateau, elle supporte le poids de celui-ci et des masses 53 qui y sont placées. Le mode d'action des surfaces inférieure et supérieure et des moyens de pression est d'une façon générale le même que dans l'appareil des figures 1 et 2. En raison du mouvement relatif de translation des deux surfaces dans la direction longitudinale et de leur adhérence vis-à-vis des têtes d'ail, ces dernières sont forcées de rouler entre deux surfaces. De plus, la forme des têtes étant irrégulière, elles ne tournent pas sur elles-mêmes autour d'un axe déterminé, mais tournent en tous sens. Les forces exercées par l'appareil s'appliquent donc successivement dans toutes les régions de la superficie des têtes, facilitant ainsi leur dislocation. Si une tête n'est pas entièrement séparée en gousses après avoir dépassé le premier plateau, la même action est reprise par le second plateau.

La longueur de chaque portion de surface supérieure horizontale 44 et les poids 53 correspondants sont déterminés de façon à assurer une séparation complète des têtes d'ail en fin de parcours, les poids 53 pouvant être ajustés pour chaque lot de têtes en fonction de leur résistance à l'éclatement. Les butées 48 sont réglées, quant à elles, de façon que la distance e entre la surface inférieure 40 et les portions de surface supérieure horizontales 44, pour la position limite basse des plateaux, soit inférieure au diamètre des têtes, et que la hauteur disponible à l'entrée des surfaces inclinées 45 soit supérieure à ce diamètre.

L'existence des deux portions de surface supérieure horizontales 44 pouvant être soulevées individuellement permet de traiter simultanément deux têtes d'ail, chacune supportant un poids déterminé. Bien entendu, il est possible de prévoir une seule portion de surface supérieure horizontale plus longue, ou des portions de surface horizontales plus nombreuses et plus courtes, le nombre de têtes traitées par unité de temps étant fonction croissante du nombre de portions de surface indépendantes.

La rugosité de la surface inférieure assure, tout comme la forme de celle de l'appareil précédemment décrit, un entraînement positif des têtes d'ail. Cependant, la vitesse d'avance de celles-ci n'est qu'environ la moitié de celle de la surface 40, par rapport à laquelle elles roulent.

Bien entendu, l'invention n'est pas limitée aux modes de réalisation décrits et représentés.

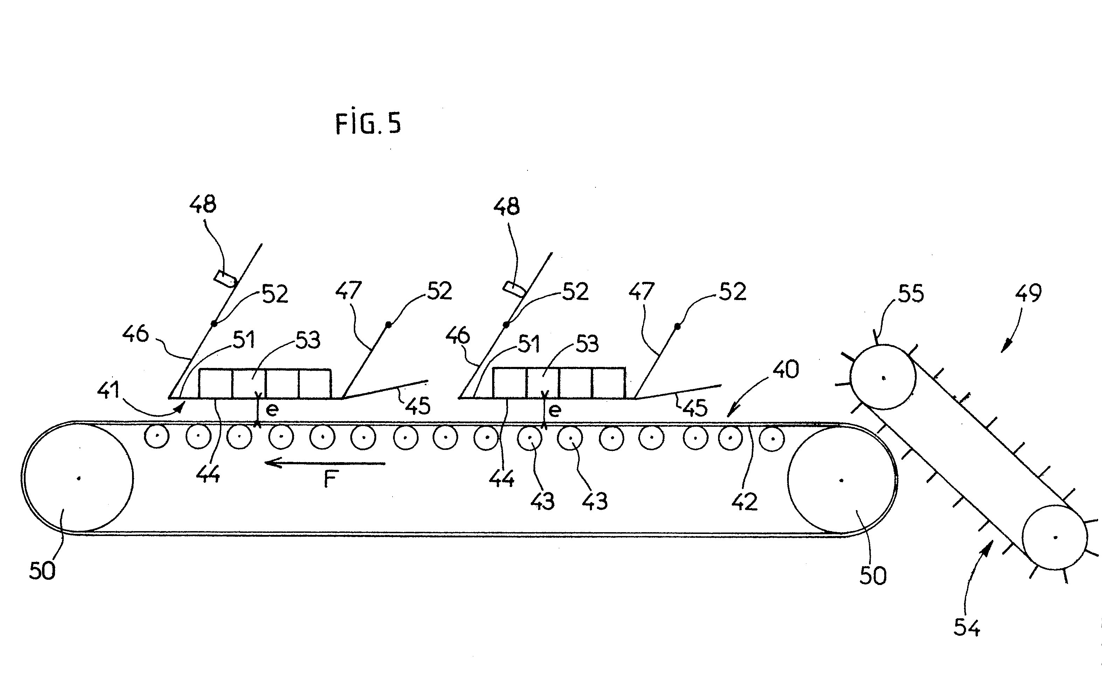

En particulier, il est possible d'associer la forme de surface à éléments convexes des figures 1 et 2 avec une pluralité de portions de surface supérieures horizontales comme dans la figure 5. Quels que soient la forme des surfaces et le nombre des portions de surface supérieure horizontales, le mouvement de soulèvement de ces dernières peut être un mouvement de translation vertical comme aux figures 1 et 2, ou un mouvement mixte comme à la figure 5, ou un mouvement plus complexe, obtenu par exemple par l'absence de guidage du châssis qui les porte. Dans tous les cas également, la surface supérieure peut être rappelée vers le bas aussi bien par des ressorts tels que 29 que par des masses telles que 53.

Revendications.

1. Appareil pour séparer les têtes d'ail en gousses, caractérisé en ce qu'il comprend une surface inférieure (40) sensiblement horizontale, propre à supporter les têtes d'ail, et une surface supérieure (41) propre à s'appuyer sur les têtes posées sur la surface inférieure, la surface inférieure circulant sans fin dans une direction longitudinale (19; F) et la surface supérieure, qui ne circule pas dans la direction longitudinale, présentant un degré de liberté en hauteur, et des moyens (29; 53) pour presser la surface supérieure contre les têtes, tout en lui permettant d'être soulevée par celles-ci, de façon à faire tourner les têtes en tous sens et à exercer sur elles des forces de rupture ($F_1$, $F_2$) en évitant de détériorer les gousses (32).

2. Appareil selon la revendication 1, caractérisé en ce que le mouvement vers le bas de la surface supérieure est limité par des butées (28; 48).

3. Appareil selon la revendication 2, caractérisé en ce que lesdites butées sont réglables.

4. Appareil selon l'une des revendications précédentes, caractérisé en ce que des moyens de support rigides (9, 10; 43) sont prévus pour maintenir la surface inférieure (40) fixe en hauteur.

5. Appareil selon l'une des revendications précédentes, caractérisé en ce que lesdits moyens (29; 53) pour presser la surface supérieure sont propres à permettre un réglage de la force d'appui.

6. Appareil selon l'une des revendications précédentes, caractérisé en ce que les moyens pour presser la surface supérieure comprennent des ressorts (29).

7. Appareil selon l'une des revendications précédentes, caractérisé en ce que la surface supérieure comprend au moins une portion de surface horizontale (44) suspendue de façon à pouvoir être soulevée d'un seul bloc par les têtes d'ail présentes entre les surfaces inférieure et supérieure.

8. Appareil selon la revendication 7, caractérisé en ce que la surface supérieure comprend une pluralité de portions de surface horizontales (44) suspendues pouvant être soulevées individuellement.

9. Appareil selon l'une des revendications 7 et 8, caractérisé en ce qu'à chaque portion de surface supérieure horizontale est raccordée, en amont de celle-ci par rapport au sens de circulation (F) de la surface inférieure, une portion de surface descendante (45) qui se soulève avec elle.

10. Appareil selon l'une des revendications 7 à 9, caractérisé en ce qu'il comprend des moyens (54) pour amener des têtes d'ail une à une sur la bande transporteuse de façon que la distance entre deux têtes dans la direction longitudinale soit au moins égale à la longueur d'une portion de surface supérieure horizontale (44).

11. Appareil selon l'une des revendications précédentes, caractérisé en ce que la surface supérieure ou chaque portion de surface supérieure est suspendue au moyen de leviers (46, 47) formant un parallélo-

0153244

16

gramme déformable, de façon que le soulèvement de cette surface ou portion de surface s'accompagne d'un léger déplacement dans le sens de circulation de la surface inférieure.

12. Appareil selon l'une des revendications précédentes, caractérisé en ce que la surface inférieure et la surface supérieure sont formées chacune d'éléments de surface convexes répartis selon la direction longitudinale.

13. Appareil selon la revendication 12, caractérisé en ce que lesdits éléments de surface de contact sont cylindriques, leurs génératrices s'étendant perpendiculairement à la direction longitudinale.

14. Appareil selon la revendication 13, caractérisé en ce que lesdits éléments appartiennent à des rouleaux (3, 12) alignés à distance les uns des autres dans la direction longitudinale, la distance minimale entre deux rouleaux voisins de la surface inférieure étant inférieure à la plus petite dimension des gousses d'ail à séparer.

15. Appareil selon la revendication 14, caractérisé en ce que lesdits rouleaux peuvent tourner librement autour de leur axe (4, 13).

16. Appareil selon l'une des revendications 14 et 15, caractérisé en ce que les rouleaux inférieurs (3) sont entraînés en translation dans la direction longitudinale par au moins une chaîne sans fin (1, 2) sur laquelle sont fixés leurs axes (4).

17. Appareil selon la revendication 16, caractérisé en ce que ladite chaîne sans fin (1) circule entre deux roues dentées ($5_1$, $6_1$) dont les axes (7, 8) sont perpendiculaires à la direction longitudinale et distants l'un de l'autre dans cette direction, en formant entre lesdites roues un brin supérieur et un brin inférieur, qu'elle porte des rouleaux répartis uniformément sur toute sa longueur et que ladite surface inférieure est formée par les rouleaux portés par ledit brin supérieur.

18. Appareil selon l'une des revendications précédentes, caractérisé en ce que la surface inférieure (40) est consitutée par la surface rugueuse d'une bande transporteuse (42).

19. Appareil selon la revendication 18, caractérisé en ce que les surfaces inférieure (40) et supérieure (41) présentent de l'élasticité dans la direction perpendiculaire à ces surfaces.

20. Appareil selon l'une des revendications 18 et 19, caractérisé en ce que la bande transporteuse est supportée, dans la région où elle constitue la surface inférieure, par des rouleaux (43) espacés dans la direction longitudinale.

21. Appareil selon la revendication 20, caractérisé en ce que les rouleaux sont libres en rotation.

FIG.1

0153244

FIG. 2

01532444

FIG. 3

FIG. 4

FIG.5

Office européen
des brevets

**RAPPORT DE RECHERCHE EUROPEENNE**

0153244
Numero de la demande

EP 85 40 0260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 353 294 (R.G. DUDLEY) <br> * Colonne 2, ligne 27 - colonne 5, ligne 18; figures 1,2 * | 1 | A 23 N 15/00 <br> A 23 N 5/00 |
| | --- | | |
| A | DE-C- 116 642 (A. HELMRICH) | | |
| | --- | | |
| D,A | FR-A-1 560 456 (ETS. AUBERT ET CIE.) | | |
| | --- | | |
| D,A | FR-A-1 561 968 (ETS. AUBERT ET CIE.) | | |
| | --- | | |
| A | FR-A-2 340 060 (L.J. BOUCHER) | | |
| | ----- | | **DOMAINES TECHNIQUES RECHERCHES (Int. Cl.4)** <br><br> A 23 N |

Le présent rapport de recherche a été établi pour toutes les revendications

| Lieu de la recherche <br> LA HAYE | Date d'achèvement de la recherche <br> 28-05-1985 | Examinateur <br> NEHRDICH H.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82